# EUROPÄISCHE PATENTANMELDUNG

(11) **EP 2 863 101 A2**
(43) Veröffentlichungstag der Anmeldung: **22.04.2015**
(21) Anmeldenummer: 14000429.2
(22) Anmeldetag: 05.02.2014
(51) Int. Cl.: F16M 11/04, F16M 11/10, F16M 11/20, F16M 11/18, F16M 11/42, F16M 13/04, G03B 17/56, G03B 35/08, G02B 27/22

(54) **Kamerarig, Handheld-Kamerarig, Halterungskopf, Bildaufnahmeanordnung, Verfahren zum Erstellen einer Aufnahme, Bildschirmträger und Verfahren zum Betrachten einer Aufnahme**

(30) Priorität: 05.02.2013 DE 102013001903
(71) Anmelder: Deniz, Ben, 22303 Hamburg (DE)
(72) Erfinder: Deniz, Ben, 38440 Wolfsburg (DE)
(74) Vertreter: Farago, Peter Andreas

(57) **Zusammenfassung**

Die Erfindung betrifft ein Kamerarig (1), einen Halterungskopf (12,13), eine Aufnahmeanordnung sowie ein Verfahren zum Erstellen und ein Verfahren zum Betrachten einer stereoskopischen oder autostereoskopischen Aufnahme.

Um eine stereoskopische oder autostereoskopische Aufnahme zu erstellen, müssen identische Kameras (53, 54) in einer sehr genauen Weise aufeinander abgestimmt aufgestellt werden. Sowohl das Feintuning als auch die Handhabung der vorhandenen Kamera-Rigs (1) sind sehr komplex und zeitintensiv,

Die Erfindung schlägt ein Kamerarig (1) vor, bei welchem ein Koppelantrieb für eine gekoppelte Bewegung zweier Halterungsköpfe (12, 13) vorgesehen ist. Durch das Koppeln der Bewegungen, auf verschiedenen Seiten des Kamerarigs gegenläufig zueinander, kann jeweils ein Paar Kameras (53, 54) mit einfachstem Aufwand und hochpräzise verstellt werden. Dies kann sowohl beim Vorbereiten einer Aufnahme als auch während des Erstellens einer Aufnahme erfolgen. Des Weiteren erlaubt es als erstes die einfache Verstellbarkeit zwischen Portrait- und Landscape-Modus, unabhängig von der Kamera-Anzahl.

Während der Aufnahme schlägt die Erfindung vor, den Bildausschnitt mittels mehrerer Tilt-Shift-Objektive zu versetzen, um damit einen größeren überlappenden Bildbereich zu erzeugen.

Die Wiedergabe der erfassten Bilder sollten auf dem Wiedergabegerät bildschirmfüllend erfolgen, und es wird durch einen Schwenkkopf der TV-Halterung einfach zwischen Portrait- und Landscape-Modus umgeschaltet.

## Beschreibung

Die Erfindung betrifft ein Kamerarig, ein Handheld-Kamerarig, einen Halterungskopf, eine Bildaufnahmeanordnung für beide Bildformate (hochkant und quer), einen Bildschirmträger, ein Verfahren zum Erstellen einer Bildaufnahme sowie ein Verfahren zum Betrachten einer Bildaufnahme.

Das Erstellen von stereoskopischen 3D-Bildem in Form von Fotos oder Videos erfolgt in der Regel mittels Einsatzes von zwei identischen Kameras und den gleichen Einstellwerten, welche die Szene aus leicht unterschiedlichen Perspektiven erfassen. Es ist entscheidend für die Erstellung von guten stereoskopischen Bildern, dass diese sowohl mechanisch als auch optisch perfekt aufeinander ausgerichtet sind, um Bildverluste und nachträgliche Anpassung in der Postproduktion so gering wie möglich zu halten.

Es sind Kamerarigs bekannt, welche auf einem Schienensystem zwei Halterungskopftrageschlitten aufweisen. Jeder Halterungskopftrageschlitten trägt einen Halterungskopf für jeweils eine Kamera. Es lässt sich die Interaxialdistanz und die Konvergenz einstellen, und die Kameras lassen sich zeitgleich auslösen,

Es gibt drei grundlegende Ansätze für die stereoskopische Bilderfassung, mit unterschiedlichen Tiefenwirkungen. Der einfachste Ansatz erfolgt mittels des Einsatzes eines Single-Objektiv-Spiegel-Adapters. Der primäre Vorteil dieses Verfahrens ist es, dass es einfach ist und die Handhabung einer einzigen Kamera erfordert. Die Nachteile liegen allerdings im fixierten interaxialen Abstand und der damit verbundenen Einschränkung durch die Größe des Objektivs. Zudem werden das linke und das rechte Bild auf einem einzigen Bild untergebracht, was Kompromisse in der Bildqualität nach sich zieht.

Ein weiterer Weg der stereoskopischen 3D-Bilderfassung erfolgt mit sogenannten Beam-Splitter-Mirror-Rigs, welche oft auch als Spiegelrigs oder Strahlenteiler-Rigs bezeichnet werden, mit einer versetzten Anordnung und unterschiedlicher Kameraausrichtung. Es erlaubt eine horizontal und vertikal versetzte Anordnung der Kameras mit dem Vorteil einen minimal interaxialen Abstand zum Nullpunkt von 0,0 cm zu fahren. Bei stereoskopischen Nahaufnahmen ist es mit diesem Verfahren möglich, kleinere Abstände einzustellen als es das eigentliche Kameragehäuse oder Kameraobjektiv zulässt. Man nimmt allerdings aufgrund des Spiegels einen Lichtverlust auf beiden Kameras in Kauf. Außerdem muss der dünne Strahlteiler, welcher aus Glas besteht, sehr vorsichtig behandelt werden. Zudem entstehen Transportprobleme, eine zeitintensive Montage, kompliziertere Kalibrierung und eine limitierte Kamerabewegung durch die sperrige Bauweise.

Eine dritte Möglichkeit des stereoskopischen 3D-Bilderfassung besteht im side-by-side Verfahren, bei welchem zwei identische Kameras auf einem Rig parallel nebeneinander montiert werden. Der Vorteil liegt beispielsweise darin, dass kein Lichtverlust im Vergleich zu den Spiegelrigs stattfindet. Der Nachteil liegt naturgemäß der Begrenzung des minimalen interaxialen Abstandes durch das Kameragehäuse oder das verwendete Objektiv.

Es gibt bereits verschiedene Arten von stereoskopischen 3D-Kameras, welche im Funktionsumfang und in den Einstellungswerten variieren. In der Regel liegt der interaxiale Abstand bei 6,5 cm, was dem menschlichen Augenabstand entspricht und sich auf den horizontalen seitlichen Versatz der beiden Kameras bezieht, wobei die Richtung "seitlich" aufgefasst sei gegenüber der eingestellten Zielrichtung der Kameras zum zu erfassenden Objekt. Die Kameras sitzen auf dem Rig an einem Schienensystem. Der Interaxialabstand sei gemessen parallel zu der Schienenverschiebungsrichtung, welche in der Praxis als x-Achse bezeichnet wird.

Allerdings variieren die interaxialen Werte und die Konvergenzwerte, und zwar in Abhängigkeit zur Szenengröße (Höhe, Breite, Tiefe), zum Kameraabstand, zum Kameramodell, zu den verwendeten Objektiven und zur Bildschirmgröße bei der Wiedergabe, wodurch Einfluss auf die Tiefenwirkung des Bildes genommen wird. Darüber hinaus ist es erforderlich, Kameraeinstellungen abzugleichen, wie beispielsweise die ISO-Empfindlichkeit, der Weißabgleich, Belichtungsreihen, Auflösung, Blendenöffnung, Zoom, Numerierung und Belichtungszeit.

Die vorliegende Erfindung betrifft in erster Linie side-by-side Rigs, wobei das verwendete Verfahren ohne weiteres auf Beam-Splitter-Mirror Rigs übertragen und adaptiert werden kann.

Der Erfindung liegt die Aufgabe zu Grunde, dem bestehenden Stand der Technik eine verbesserte oder erweiterte Alternative hinzuzufügen.

Gemäß einem ersten Aspekt der vorliegenden Erfindung löst diese Aufgabe ein Kamerarig, insbesondere ein side-by-side Kamerarig, mit einem Schienensystem mit zwei in x-Achsen beweglich angeordneten Halterungskopftrageschlitten, bevorzugt mit zwei an den Halterungskopftrageschlitten angeordneten Halterungsköpfen, zum Halten zweier Kameras beim Erstellen von stereoskopischen und autostereoskopischen Aufnahmen, wobei ein Koppelantrieb für eine gekoppelte Bewegung beider an den Halterungskopftrageschlitten tatsächlich oder potentiell angeordneten Halterungsköpfe vorgesehen ist.

Begrifflich sei hierzu Folgendes erläutert:

Im Rahmen der hier vorliegenden Offenbarung sei jeder unbestimmte Artikel oder Zahlenangabe wie beispielsweise "ein", "zwei" usw. jeweils als Mindestens-Angabe zu verstehen, also als "mindestens ein ..,", "mindestens zwei ..." usw., sofern es nicht aus dem jeweiligen Kontext ergibt, dass etwa dort nur "genau ein ...", "genau zwei ..." usw. gemeint sein soll. Im Zweifelsfall sei eine Angabe als eine "mindestens"-Angabe verstanden.

Im hier vorliegenden Fall bedeutet die Forderung nach "zwei" Halterungkopftrageschlitten, Halterungsköpfen und Kameras, dass "mindestens zwei" dieser Elemente vorhanden sein sollen, insbesondere eine gerade Anzahl, wovon jeweils zwei Halterungskopftrageschlitten, Halterungsköpfe und Kameras ein Paar in funktionaler und mechanischer Hinsicht bilden.

Ein side-by-side Kamerarig zeichnet sich dadurch aus, dass es ein Schienensystem aufweist, wobei im Schienensystem die beiden Halterungskopftrageschlitten gleitend angebracht sind und sich entlang des vorgegebenen Schienensystems zueinander und voneinander weg bewegen können, wobei genau diese Bewegung die x-Achse darstellt. Mit anderen Worten bezeichnet der Fachmann diese Bewegung als die Verstellung des Interaxialabstands, gemessen von Objektivmitte zu Objektivmitte.

Der "Halterungskopftrageschlitten" weist zwei funktionale Teile auf: einerseits ein geführtes Mittel im Schienensystem, andererseits ein tragendes Mittel für den Halterungskopf.

Der modulare "Halterungskopf" weist ebenfalls zwei funktionale Teile auf: einerseits einen Verbindungsteil zum Halterungstrageschlitten, um dort sicher befestigt werden zu können; andererseits ein Halteelement zum Halten einer Kamera.

Bei den "Kameras" sei insbesondere an handelsüblich erhältliche digitale Spiegelreflexkameras oder Videokameras gedacht.

Der "Koppelantrieb" muss dazu eingerichtet sein, beide Halterungsköpfe gleichzeitig zu bewegen. Dies kann unmittelbar passieren, indem der Koppelantrieb direkt auf die beiden Halterungsköpfe einwirkt, und zwar unter Umgehung einer Krafteinwirkung auf den Halterungskopftrageschlitten, und/oder unter Umgehung einer Bewegung der Halterungskopftrageschlitten. Bevorzugt sei jedoch daran gedacht, dass der Koppelantrieb Kräfte und/oder Momente auf die Halterungskopftrageschlitten weitergibt. Denn die Halterungskopftrageschlitten sind ohnehin im Schienensystem verbaut, sodass der Koppelantrieb beispielsweise versteckt und mechanisch geschützt innerhalb des Schienensystems angeordnet sein kann.

Die "Bewegungen", welche gekoppelt sein sollen, können insbesondere eine x-Achsen-Verschiebung und/oder beispielsweise eine Rotation um die y-Achse sein. Als die y-Achse bezeichnet der Fachmann in der stereoskopischen Aufnahmetechnik als Konvergenz, die vertikal nach oben zeigende Achse, wobei der Drehpunkt des Halterungskopfes bevorzugt durch den Nodalpunkt des jeweiligen Kamera-Objektivs verläuft.

Das "Koppeln" der Bewegung sei so zu verstehen, dass die beiden Bewegungen zeitgleich und um ein identisches Maß durchgeführt werden. In der bevorzugten Ausführungsform erfolgen die beiden Bewegungen innerhalb eines Paares zeitgleich und um dasselbe Maß, aber entgegengesetzt zum Nullpunkt.

Idealerweise sind die beiden Bewegungen zwingend gekoppelt, wobei also kein Entkoppelmittel vorgesehen ist, mit welchem man eine der beiden Halterungsköpfe oder sogar beide Halterungsköpfe vom Koppelantrieb abkuppeln könnte. Der Bediener des vorgeschlagenen Kamerarigs kann sich dann darauf verlassen, dass er lediglich den Koppelantrieb bedienen muss, und beide an den Halterungsköpfen gehaltenen Kameras führen - insbesondere zeitgleich und/oder im gleichen Maß - eine vorbestimmte Bewegung aus, beispielsweise fahren sie näher zueinander oder weiter voneinander weg und/oder sie rotieren beide zu einem näheren oder zu einem ferner liegenden gemeinsamen Konvergenzpunkt in der Tiefe.

In einer bevorzugten Ausführungsform weist der Koppelantrieb x-Verschiebemittel für die Halterungstrageschlitten auf, sodass bei Verschieben eines Halterungskopftrageschlittens entlang der x-Achse sich der andere Halterungskopftrageschlitten ebenfalls entlang der x-Achse verschiebt, insbesondere symmetrisch bezüglich eines Nullpunkts am Kamerarig.

In einer einfachen Variante weisen die x-Verschiebemittel einen Motor für jeden der beiden Halterungskopftrageschlitten oder bevorzugt einen gemeinsamen Motor auf. Alternativ oder kumulativ ist es von Vorteil, wenn die x-Verschiebemittel einen Gürtelzug mit einer Umlenkung aufweisen. Als ein Gürtelzug sei ein insbesondere auf Zug belastbares Verbindemittel, wie beispielsweise ein Gurt, ein Band, ein Drahtseil, ein Draht oder ein Seil oder Zwirn oder Garn verstanden, welches an den beiden betrachteten Halterungskopftrageschlitten jeweils angeschlossen ist, und zwar bevorzugt auf beide Halterungskopftrageschlitten von derselben Seite der x-Achse aus angreifend. So kann beispielsweise am ersten Halterungskopftrageschlitten (oben befestigt) ein Drahtseil hin zu einer auf einer ersten Seite liegenden Umlenkung führen, dann um die Umlenkung herum, unter dem ersten Halterungskopftrageschlitten hindurch oder über ihn hinweg oder an ihm vorbei und dann zum zweiten Halterungskopftrageschlitten (unten befestigt). Bei einer solchen, recht einfachen mechanischen Konstruktion führt das Verschieben des einen Halterungskopftrageschlittens unter Zugkraftaufbringung auf das Drahtseil automatisch zum Verschieben des anderen Halterungskopftrageschlittens, und zwar um das gleiche entgegensetzte Maß in der x-Achse.

Wenn gleich zwei oder mehr Gürtelzuge vorgesehen sind, und zwar zu verschiedenen Seiten hin, was auch als ein umlaufender Gürtelzug ausgebildet sein kann, dann ist es bei geeigneter Gestaltung beliebig, in welche Richtung einer der beiden Halterungskopftrageschlitten beispielsweise manuell oder von einem Motor bewegt wird, oder auf welches der beiden Drahtseile oder der anderen monofilamentartigen oder multifilamentartigen Verbindungsstruktur ein Motor und in welche Richtung einwirkt. In jedem Falle bewegen sich die beiden Halterungskopftrageschlitten um dasselbe Maß und gegenüber dem Nullpunkt spiegelsymmetrisch zueinander.

Als der Nullpunkt sei derjenige Punkt am Kamerarig verstanden, um welchen herum die Kameras symmetrisch zum Erstellen der stereoskopischen Aufnahme angeordnet werden sollen. In den meisten Fällen wird der Nullpunkt einfach der geometrische Mittelpunkt des Schienensystems in seiner x-Achsen-Länge sein. Der Nullpunkt wird in den meisten Fällen außerdem dem Schwerpunkt des Kamerarigs entsprechen.

Alternativ oder kumulativ wird vorgeschlagen, dass der Koppelantrieb y-Rotationsmittel für die Halterungsköpfe an den Halterungskopfschlitten aufweist, sodass beim Rotieren eines Halterungskopfes um die y-Achse der andere Halterungskopf ebenfalls rotiert, insbesondere um ein identisches Winkelmaß in entgegengesetzter Rotationsrichtung.

Genau wie bei den x-Verschiebemitteln kann auch hier das Merkmal in mehreren verschiedenen Weisen umgesetzt werden: so ist einerseits eine starre Kopplung dergestalt denkbar, dass schon beim Rotieren des einen Halterungskopfes manuell der andere betrachtete Halterungskopf mechanisch gezwungen ebenfalls gedreht wird. Als weitere Variante ist denkbar, dass eine Steuerung vorgesehen ist, und dass zwei Motoren vorgesehen sind, nämlich jeweils ein Motor für jede der beiden Halterungsköpfe in Rotationsrichtung, und dass die Steuerung dazu eingerichtet ist, immer beide oder optional beide Halterungsköpfe zu rotieren. Wie bei den x-Verschiebemitteln ist auch bei der Rotation um die y-Achse bevorzugt eine gleichzeitige und/oder im Winkelmaß gleiche und/oder paarweise entgegengesetzte Bewegung die bevorzugte Ausführungsform.

Besonders bevorzugt ist es, wenn die y-Rotationsmittel mit einem einzigen Motor für die zwei betrachteten Halterungsköpfe auskommen, wobei ein Getriebe vorgesehen ist, welches den Antrieb des einen Motors auf die Bewegungen der zwei Halterungsköpfe umsetzt. Idealerweise treibt ein einziger Motor sämtliche Halterungsköpfe hinsichtlich der gerade betrachteten Bewegung an.

In einer konkreten Umsetzung wird vorgeschlagen, dass die y-Rotationsmittel eine Welle und eine Anzahl Schneckengetriebe aufweisen, insbesondere ein einander zugeordnetes Paar rotationsgekoppelter Halterungsköpfe ein linksdrehendes Schneckengetriebe und ein rechtsdrehendes Schneckengetriebe aufweist, wobei die beiden betrachteten Halterungsköpfe auf unterschiedlichen Seiten des Nullpunkts des Kamerarigs angeordnet sind. Mit einer solchen Ausgestaltung ist es möglich, konstruktiv einfach beispielsweise eine durchgehende Zahnstange vorzusehen, welche unterhalb der rotationsgekoppelten Halterungsköpfe oder jedenfalls an den rotationsgekoppelten Halterungsköpfen entlang läuft, wobei jedes mitlaufende Schneckengetriebe auf eine Umdrehung der Zahnstange um deren x-Achse in eine Rotation des Halterungskopfes um die y-Achse umgesetzt wird. Bei Vorsehen zweier unterschiedlicher Drehrichtungen bei zwei Getrieben, wobei jedes Getriebe beispielsweise einfach einen Schraubengang aufweisen kann, rotieren die beiden Halterungsköpfe um die jeweilige y-Achse im entgegengesetzten Drehsinn. Dreht die Zahnstange in die eine Richtung, rotieren die beiden rotationsgekoppelten Halterungsköpfe daher zu einem gemeinsamen weiter entfernt liegenden Konvergenzpunkt; dreht sich die Zahnstange hingegen in die andere Richtung, rotieren die beiden rotationsgekoppelten Halterungsköpfe hingegen zu einem näher am Kamerarig gelegenen gemeinsamen Konvergenzpunkt. Je feiner die Zähne eines Getriebes ausgestaltet sind, desto feinere Rotationswinkel lassen sich bewirkten.

Bevorzugt sind die zwei rotationsgekoppelte Halterungsköpfe immer oder zumindest im Normalbetrieb um ein gleiches Winkelmaß, aber entgegengesetzt, gegenüber einer Längserstreckung des Schienensystems am Kamerarig rotiert. Wenn dies paarweise der Fall ist, können sämtliche Halterungsköpfe am Kamerarig auch bei Rotation alle auf den gemeinsamen Punkt in der Tiefe orientiert sein.

Bevorzugt sind die verschiedenen Paare von rotationsgekoppelten Halterungsköpfen mit einer unterschiedlich übersetzten Kopplung an einem gemeinsamen Antrieb angeschlossen, sodass zwei zu einem ersten Paar gehörige Halterungsköpfe eine langsamere Rotation um die y-Achse ausführen als zwei zu einem zweiten Paar Halterungsköpfe gehörige Rotationsköpfe, welche weiter vom Nullpunkt des Kamerarigs entfernt liegen und demgemäß die beiden Halterungsköpfe des ersten Paares außen flankieren.

Es wurde bereits erläutert, dass ein Kamerarig - unabhängig davon, wie viele Motoren oder Kupplungen oder Getriebe vorgesehen sind - dann besonders bevorzugt ist, wenn sämtliche vorhandenen Halterungsköpfe in ihren Bewegungen gekoppelt sind, sei es in einer Rotation um die y-Achse, sei es bei einer Verschiebung entlang der x-Achse und/oder in einer weiteren Bewegung, beispielsweise einem Neigungswinkel um die x-Achse herum und/oder beispielsweise in einer Rollbewegung um die z-Achse herum, wobei die z-Achse die Richtung jedes einzelnen Kameraträgers bzw. seiner Kamera in Richtung zum gerade angepeilten Objekt ist. Die Ausrichtung erfolgt zum Abstimmen der einzelnen Kameras aufeinander. Die somit vorhandene Anzahl an Halterungsköpfen soll mindestens 2, 4, 8 oder mehr betragen, wobei eine gerade Anzahl von Halterungsköpfen für eine gerade Anzahl von Kameras bevorzugt wird.

Bei einem Kamerarig für mehr als zwei Kameras sollen die Kamerapositionen äquidistant sein.

Es wird vorgeschlagen, dass der Halterungskopftrageschlitten für seinen Halterungskopf oder der Halterungskopf selbst einen Kippmechanismus aufweist, der mittels eines Kippens einer vom Halterungskopf gehaltenen Kamera um 90° einen Wechsel zwischen dem Landscapemodus und dem Portraitmodus ermöglicht, wobei der Kippmechanismus bevorzugt eine mechanische Sicherung aufweist, insbesondere mit einem Steckstift.

Mit einem Kippmechanismus wie vorgeschlagen, kann der Bediener des Kamerarigs zwischen einer Bildaufnahme, sei es eines Films oder eines Fotos, einfach zwischen den beiden Bildformaten umschalten, ohne die Kameras abnehmen zu müssen und ohne die Halterungsköpfe entfernen zu müssen und ohne die miteinander bewegungsgekoppelten Halterungsköpfe oder Halterungskopftrageschlitten in ihren übrigen Freiheitsgraden verstellen zu müssen.

Es ist von Vorteil, wenn der Halterungskopf eine Schnelllösehalterung mit einem Schnelllösemechanismus aufweist

Hierunter sei zu verstehen, dass sich die Kamera mit einem Verbindungsteil zum Halterungskopf lösen lässt, ohne den Halterungskopf zu verstellen, insbesondere auch mit einer Hand oder mit nur einer Bewegung. Beispielsweise sei an eine eingerastete Schiebeplatte oder Gleitplatte gedacht, mit welcher die Kamera am Halterungskopf befestigt ist, beispielsweise eingeschoben ist. Die Kamera kann in der eingeschobenen oder anderweitig angebrachten Position mit einer Sicherung versehen sein, beispielsweise mit einem Sicherungsstift und/oder mit einem Schraubgewinde. Die Sicherung kann eine Feder aufweisen, welche die Sicherung in der gesicherten Position hält, sodass bei einem Auslenken des Sicherungselements aus der Sicherungsposition eine Rückstellkraft aufbaut. Eine solche Konstruktion gewährleistet es, dass sich die Kamera nicht während des Erstellens einer Bildaufnahme ungewollt von selbst aus der Schnelllösehalterung löst.

Der Halterungskopf kann gegenüber dem Halterungskopftrageschlitten ein Nodalachsenversatzmittel aufweisen, insbesondere einen Nodalachsenversatzschlitten für einen Versatz einer getragenen Kamera entlang der x-Achse und der z-Achse.

Jeder der im Rahmen der hier vorliegenden Offenbarung angesprochenen Schlitten kann ein Fixiermittel mit Feststellfunktion aufweisen, um eine unbeabsichtigte Bewegung des Schlittens zu verhindern. Dasselbe gilt für Nicht-Linearbewegungen wie beispielsweise eine Rotation, ein Kippen oder ein Rollen.

Hinsichtlich der Rotation um die y-Achse wird vorgeschlagen, dass der Halterungskopf ein zusätzliches y-Rotationslager aufweist, Ein solches kann beispielsweise aus zwei gegeneinander verdrehbaren Scheiben oder einer anderweitigen Konstruktion bestehen, wobei bevorzugt der mechanische Widerstand gegen eine Rotation stufenlos oder in mehreren Stufen, insbesondere 90 °-Stufen, schnell verstellbar ist, was besonders in der Panoramaaufnahme hilfreich ist.

In jedem Falle scheint es vorteilhaft, wenn möglichst viele der Freiheitsgerade zum Bewegen der Kamera, bevorzugt alle Freiheitsgrade der Bewegung der Kamera, jedoch mit Ausnahme der linearen Verstellung entlang der x- und z-Achsen, am Halterungskopf angeordnet sind. Die Halterungskopftrageschlitten können leicht ausgetauscht werden.

Jeder der Freiheitsgrade kann mit einem Feinversteller fernverstellbar sein, beispielsweise der y-Rotationswinkel, der x-Neigungswinkel und/oder der z-Rollwinkel einer vom Halterungskopf gehaltenen Kamera. Als Feinversteller werden beispielsweise Räudelräder vorgeschlagen.

Es wurde bereits erwähnt, dass bevorzugt nur genau ein Motor für eine gekoppelte Bewegung zweier Halterungsköpfe gegenüber dem Kamerarig und/oder gegenüber einander vorgesehen ist, insbesondere nur genau ein Motor für ein gekoppeltes x-Verschieben zweier Halterungskopftrageschlitten gegenüber dem Kamerarig und/oder nur genau ein Motor für ein gekoppeltes y-Rotieren zweier Halterungsköpfe gegenüber dem Kamerarig.

Gemäß einem zweiten Aspekt der hier vorliegenden Erfindung löst die gestellte Aufgabe ein Handheld-Kamerarig, insbesondere ein side-by-side Handheld-Kamerarig, mit einem Griffteil, und mit zwei Halterungsköpfen zum Halten zweier Kameras, welche im Landscape-Modus kopfüber angeordnet sind, mit einem stativfähigen Standfuß.

Begrifflich sei dazu erläutert, dass das Handheld-Kamerarig dazu geeignet sein soll, mit einer Hand, jedenfalls mit zwei Händen geführt zu werden, während es optional auf einem Fuß stehen kann. Es ist relativ leicht möglich, das Handheld-Kamerarig wahlweise entweder in der Hand zu tragen oder auf ein Stativ aufzustellen, wobei die Kameras samt Kopf aus dem Handheld-Kamerarig gelöst und an einem Stativ oder Fluidhead angebracht werden. Der Wechsel zwischen einer frei Hand erstellten Aufnahme oder anderweitigen Aufnahme kann dann ohne eine Veränderung der beiden Kamerapositionen leicht durchgeführt werden.

Als "stativfähig" sei ein Standfuß dann verstanden, wenn er einen Gewindestift oder eine Gewindebohrung aufweist, welche im Durchmesser auf gegenwärtig standardmäßig verwendete Durchmesser bei Stativen passt. Zurzeit wird bei Stativen üblicherweise eine 3/8 Zoll- oder 1/4 Zoll-Gewindebohrung oder ein entsprechender Halterungsmechanismus eingesetzt. Es versteht sich, dass sich die Stativfähigkeit nicht auf ein Gewindebauteil einschränkt, sondern auch andere Verbindungsarten umfassen kann, sofern die jeweils andere Verbindungsart eine Standardverbindungsart zum Anbringen an einem Stativ oder Fluidhead darstellt.

Der Griffteil sei bevorzugt an einem vertikal zu tragenden Bereich angeordnet, beispielsweise an einer vertikal nach unten verlaufenden Stange, wenn das Tragsystem im Design so angeordnet sind, dass zwei darauf getragene Kameras in vertikaler Hinsicht gleich hoch sind. Eine einfache konstruktive Ausführung sieht bei einem horizontal verlaufenden Schienen- oder anderweitigen Träger für die zwei Kameras

Bei einem vorstehend erwähnten Kamerarigs ist es von Vorteil, wenn die beweglichen Halterungsköpfe einen Verschwenkmechanismus gegeneinander aufweisen, sodass zwei daran getragene Kameras sowohl im Landscapemodus als auch im Portraitmodus parallel gestellt werden können, wobei sich die Halterungsköpfe in einem der beiden Modi beabstandet zueinander parallelstellen, sodass die beiden getragenen Kameras Gehäuse an Gehäuse ohne dazwischenliegende Trägerteile oder Kamerakabel zu zusammengefahren werden können.

Bei einer solchen rotierten 180 ° Konstellation lassen sich die beiden Kameragehäuse bis unmittelbar aneinander heranfahren, und die entsprechenden Trageelemente der beiden zugehörigen Halterungsköpfe befinden sich nicht im Zwischenraum zwischen den beiden Kameragehäusen.

Nach einem dritten Aspekt der Erfindung löst die gestellte Aufgabe ein Halterungskopf, insbesondere zum Anordnen an einem Kamerarig wie vorstehend beschrieben und/oder an einem Handheld-Kamerarig wie vorstehend beschrieben, wobei der Halterungskopf einen Basisteil und einen kippbaren Trägerteil aufweist, wobei der kippbare Trägerteil um 90 ° kippbar ist und zu beiden Seiten der Kippbewegung jeweils einen Anschlag und/oder eine Arretierung aufweist, insbesondere mit einem Steckstift.

Begrifflich sei hierzu erläutert, dass der "Trägerteil" dazu eingerichtet sein soll, die Kamera letztendlich zu tragen, sei es unmittelbar, was bevorzugt ist, oder mittelbar. Mittels der Kippbewegung um 90 ° lässt sich die am Halterungskopf angeordnete Kamera zwischen dem Landscape-Modus und dem Portrait-Modus hin- und herkippen, ohne dass sie vom Trägerteil gelöst werden müsste. Sofern nur die Anschläge am Halterungskopf ausreichend genau bei 90 ° liegen, befindet sich die Bildausrichtung der Kamera in den beiden Endpositionen genau horizontal beziehungsweise genau vertikal, und zwar jedenfalls mit gleicher Genauigkeit. Mit einem Feinjustiermittel können Ungenauigkeiten im Anschlag oder Ungenauigkeiten durch zu schwere Kameras außerhalb des Einflussbereichs des Halterungskopfes ausgeglichen werden. Nach einem vierten unabhängigen Aspekt der vorliegenden Erfindung löst die gestellte Aufgabe ein Halterungskopf, insbesondere zum Anordnen an einem Kamerarig wie vorstehend beschrieben, wobei der Halterungskopf auch die vorstehend beschriebene Aufteilung in einen Basisteil und einen kippbaren Trägerteil aufweisen kann, wobei der Halterungskopf ein Nodalachsenversatzmittel aufweist, insbesondere zwei Nodalachsenversatzschlitten, für einen Versatz einer getragenen Kamera entlang der x-Achse und z-Achse zum Anpassen des Drehpunkts des Halterungskopfes auf den Nodalpunkt der Kamera.

Die Nodalachse ist die vertikal stehende y-Achse, welche ungefähr mittig im Kamera-Objektiv liegt und orthogonal durch die x-Achse und die z-Achse verläuft. Jede Kamera hat also aufgrund der Kippfunktion in jeder Position (Portrait und Landscape) eine eigene Nodalachse, welche von der Befestigung unterhalb der Kameras abweicht. Ein Versatz des Nodalpunktes ist im Außenbereich weniger problematisch, im Innenbereich hingegen durchaus problematischer. Der Nodalpunkt ist von Kamera und von der Brennweite des Objektivs abhängig.

Mit einfachen Worten lässt sich also mit einem modularen Nodalachsenversatzmittel ein lineares Verstellen der Kameras entlang der x-Achse und der z-Achse zum Angleichen des Nodalpunktes der Kamera auf den Drehpunkt des Kamerahalterungskopf erreichen.

Ein solcher Halterungskopf bietet einerseits neben zahlreichen Einstellmöglichkeiten für den Bediener des Halterungskopfes, insbesondere in Kombination mit einem Kamerarig. So lässt sich beispielsweise mittels der L-Form leicht erreichen, dass die beiden Kameragehäuse zweier benachbarter Kameras sehr nahe aneinander herangefahren werden können. Es wurde bereits erläutert, dass idealerweise die beiden Kameragehäuse direkt aneinander herangefahren werden können. Insbesondere sei daran gedacht, den Trägerteil des Halterungskopfes so auszugestalten, dass eine mit daran mittels einem Stativstandard entsprechenden Verbindungsmitteln angeordnete Kamera bei der Z-Form des Halterungskopfes parallel zum unteren Schenkel des Z liegt und bei der L-Form des Halterungskopfes orthogonal zum unteren Schenkel des Z steht. Wenn der untere Schenkel des Z, also der Basisteil des Halterungskopfes, horizontal angeordnet ist, dann befindet sich die Kamera während der Z-Form des Halterungskopfes im Landscape-Modus, bei einem gekippten Trägerteil, also in L-Form des Halterungskopfes, hingegen im Portrait-Modus. Besonders einfach kann dafür der Basisteil so ausgestaltet sein, dass er parallel zu der x-Achse an einem Kamerarig liegt.

Es wurde bereits erwähnt, dass ein Halterungskopf bevorzugt einen Feinversteller für einen x-Neigungswinkel und/oder für einen z-Rollwinkel einer vom Halterungskopf gehaltenen Kamera vorgesehen ist, mit einem Wirkeingriff auf eine Lage des kippbaren Trägerteils gegenüber dem Basisteil als eine praktisch sehr leicht und dennoch präzise konstruktive Ausführungsmöglichkeit zum Abgleich der beiden Kamerabilder aufeinander.

Der Feinversteller kann vor allem ein Rändelrad und/oder einen Motor aufweisen, je nachdem, ob der Feinversteller manuell und/oder automatisch betrieben werden können soll.

Nach einem fünften Aspekt der vorliegenden Erfindung löst die gestellte Aufgabe eine Bildaufnahmeanordnung mit einem Kamerarig wie vorstehend beschrieben oder mit einem Handheld-Kamerarig wie vorstehend beschrieben, mit einer daran gehaltenen Mehrzahl Kameras, wobei die Kameras bevorzugt gemeinsam gesteuert werden, und/oder bevorzugt aufweisend eine Mehrzahl Halterungsköpfe wie vorstehend beschrieben.

Es wurde bereits erläutert, dass die Kameras und ebenso die Halterungsköpfe bevorzugt in einer geraden Zahl vorliegen.

Während vorstehend zunächst nur die - insbesondere, aber nicht ausschließend-nicht mit einer Kamera bestückten Bauteile beschrieben wurden, nämlich das Kamerarig als solches, das Handheld-Kamerarig als solches und der Halterungskopf als solcher, sei mit der Bildaufnahmeanordnung nun die einsatzbereite Bestückung mit enthalten, also die Bestückung mit Bildaufhahmefähigen Kameras, die in handelsüblicher Form erhältlich sein können.

Es wird vorgeschlagen, dass die Kameras Tilt-Shift-Module verwenden. Ein solches Modul ist üblicherweise als ein Spezialobjektiv ausgebildet und ermöglicht das Verschieben und das Verschwenken des Linsensystems zum Versatz des erfassten Bildbereichs, ohne den eigentlichen Versatz der Kamera, zum Abgleich der jeweiligen Einzelbilder aufeinander. In der stereoskopischen bzw. autostereoskopischen Bilderfassung ist der nur der überlappende Bildbereich verwendbar, wodurch bei Verwendung dieses Verfahrens der Bildverlust auf ein Minimum reduziert wird. Je nach Nutzung im Portrait- oder Landscape-Modus wird das Objektiv für die Verwendung im Bildversatz der x-Achse rotiertund kann zu einem späteren Zeitpunkt auch vollständig mechanisch erfolgen.

Nach einem sechsten Aspekt der hier vorliegenden Erfindung löst die gestellte Aufgabe ein Bildschirmträger, insbesondere bestückt mit einem Bildschirm, vor allem mit einem 3b-wiedergabefähigen Flachbildfemseher, wobei der Bildschirmträger eine Schwenklagerung zum Umschwenken des Bildschirms um 90 ° zum Wechseln zwischen dem Landscape-Modus und dem Portrait-Modus für die Wiedergabe entsprechender Aufnahmen besitzt, und wobei die Schwenklagerung bevorzugt eine mechanische Sicherung, vor allem einen Stift, und/oder einen mechanischen Anschlag aufweist.

Ein solcher Träger kann beispielsweise zur Wandbefestigung vorgesehen sein oder, um die Variabilität zu erhöhen, an einem Standgestell befestigt werden. Jeweils greift er den Bildschirm so, dass idealerwelse mittels nur einer Hand der Bildschirm zwischen den beiden Formaten hin- und hergeschsvenkt werden kann. Dies bringt vor allem beim Betrachten von Fotos einen Qualitätsgewinn, weil jedes Foto unabhängig von seiner Ausrichtung auf der gesamten zur Verfügung stehenden Bildschirmanzeigefläche betrachtet werden kann.

Nach einem siebten Aspekt der vorliegenden Erfindung löst die gestellte Aufgabe ein Verfahren zum Erstellen einer stereoskopischen oder autostereoskopischen Bildaufnahme, wobei eine Mehrzahl Kameras sowie ein Kamerarig wie vorstehend beschrieben und/oder ein Handheld-Kamerarig wie vorstehend beschrieben und/oder ein Halterungskopf wie vorstehend beschrieben eingesetzt werden.

Nach einem achten Aspekt der Erfindung löst die gestellte Aufgabe die Verwendung eines Tilt-Shift-Objektivs für die Erstellung einer stereoskopischen oder autostereoskopischen Aufnahmen, bei der nur überlappende Bildbereiche benötigt werden.

Schließlich löst nach einem neunten Aspekt der hier vorliegenden Erfindung die gestellte Aufgabe ein Verfahren zum Betrachten einer stereoskopischen oder autostereoskopischen Bildaufnahme an einem 3D-wiedergabefähigen Bildschirm, wobei der Bildschirm je nach Aufnahmeformat zwischen zwei Positionen mittels eines Bildschirmträgers wie vorstehend beschrieben bis zu den jeweiligen mechanischen Anschlägen hin- und hergeschwenkt wird und bevorzugt auf eine Betrachteraugenhöhe verfahren wird.

Die Erfindung wird nachstehend anhand von Ausführungsbeispielen unter Bezugnahme auf die Zeichnung näher erläutert. Dort zeigen:
- Figur 1: in einer perspektivischen Ansicht ein Multi-Side-by-side Kamerarigs für vier Kameras ohne Nodalversatzschlitten,
- Figur 2: in einer perspektivischen Ansicht ein Detail eines Side-by-side Kamerarigs mit zwei um einen Nullpunkt des Kamerarigs symmetrisch angeordneten Halterungskopf-Trageschlitten mit jeweils einem Halterungskopf,
- Figur 3: das Detail aus Figur 2 aus einer anderen Perspektive,
- Figur 4: das Detail aus Figur 2, wobei die Halterungsköpfe in eine L-Form gebracht worden sind und gleichzeitig um eine y-Achse rotiert sind,

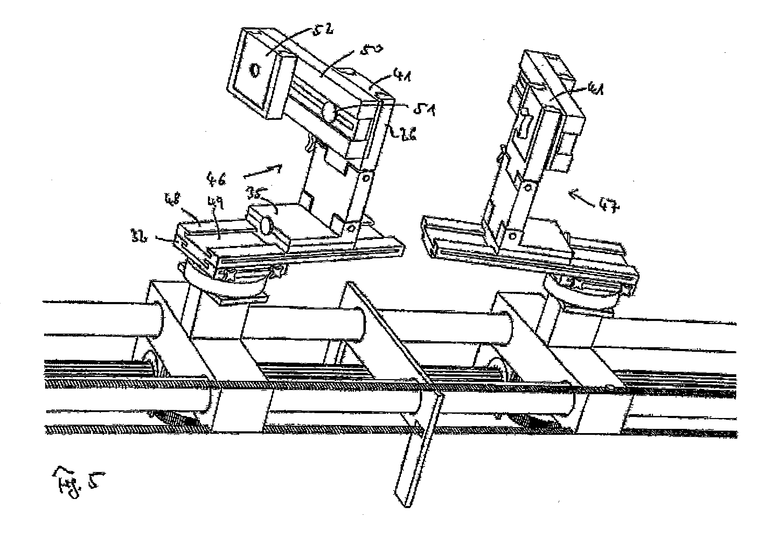

- Figur 5: in einer Ansicht wie in den Figuren 2 und 4 das Kamerarig mit zwei Halterungsköpfen mit erweiterten Freiheitsgraden und einem Nodalversatzschlitten,
- Figur 6: in einer Frontalansicht die beiden benachbarten Halterungsköpfe in einer ersten Anordnung ohne Zwischenabstand mit einer 180 °-Rotation,
- Figur 7: die Anordnung aus Figur 6 mit in L-Form gebrachten Halterungsköpfen,
- Figur 8: die beiden Halterungsköpfe aus den Figuren 6 und 7 in einer alternativen Anordnung, in welcher die Halterungsköpfe um die y-Achse jeweils um 180 ° rotiert sind,
- Figur 9: eine beispielhafte Anordnung zweier Kameras an einem side-by-side Kamerarig,
- Figur 10: in einer räumlichen Ansicht ein Handheld-Kamerarig mit einem einsatzbereiten Schienensystem sowie
- Figur 11: das Handheld-Kamerarig aus Figur 10 mit einem zusammengeklappten Schienensystem.

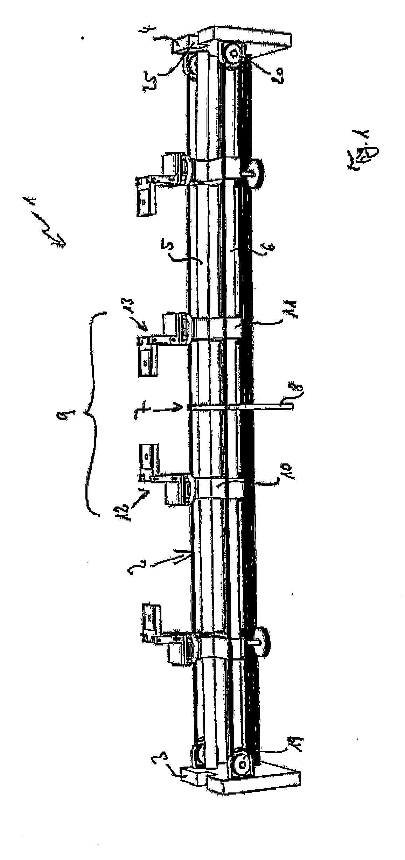

Das Side-by-side Kamerarigs 1 in Figur 1 besteht im Wesentlichen aus einem Schienensystem 2 zwischen zwei gehäuseartig angeordneten Stimplatten 3, 4 sowie vier Kameraträgern.

Das Schienensystem 2 verfügt über zwei Gleitstangen 5, 6. Die Gleitstangen 5, 6 liegen parallel zueinander und geben die x-Richtung des Side-by-side Kamerarig 1 vor.

Die vier Kameraträger bestehen jeweils aus einem Halterungskopf-Trageschlitten und einem Halterungskopf. Sie sind paarweise vorgesehen, wobei sich jedes Paar symmetrisch um einen Nullpunkt 7 des Side-by-side Kamerarig 1 herum gruppiert. Im Nullpunkt 7 ist eine Mittelscheibe 8 angeordnetund dient neben Befestigungsmöglichkeiten zusätzlich als Trägerscheibe zur Lastenverteilung.

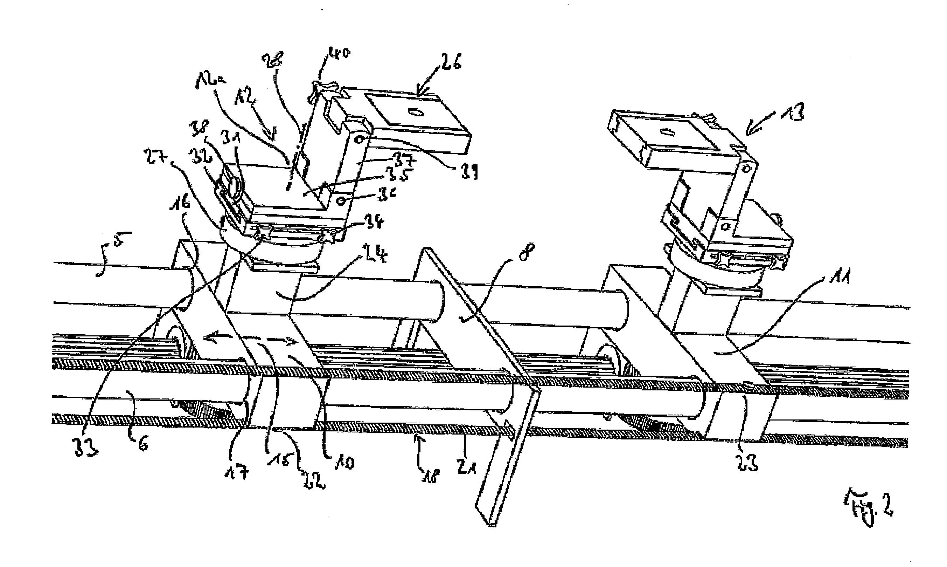

Betrachtet man das innere Paar 9 (vgl. auch die Figuren 2, 3 und 4), so besteht dieses aus einem ersten Halterungskopf-Trageschlitten 10 und einem zweiten Halterungskopf-Trageschlitten 11 sowie darauf angeordnet aus einem ersten Halterungskopf 12 und einem zweiten Halterungskopf 13.

Alle Anordnungen aus Halterungskopf-Trageschlitten/Halterungskopf sind prinzipiell gleich aufgebaut, jedenfalls aber bevorzugt spiegelsymmetrisch zum Nullpunkt aufgebaut. Im Folgenden wird daher nur eine dieser Anordnungen im Detail beschrieben:

Der erste Halterungskopf-Trageschlitten 10 besteht aus einem Gleitteil 14, welches auf den beiden Gleitstangen 5, 6 linear der x-Achse 15 gelagert ist. Hierzu greifen die beiden Gleitstangen 5, 6 zwei Gleitbohrungen 16, 17 in einem engen Spielsitz oder in einem lockeren Klemmsitz herum. Die beiden Gleitbohrungen 16, 17 können auf ihrer Innenseite eine im Werkstoff und in der Oberfläche auf die beiden Gleitstangen 5, 6 genau abgestimmte Beschichtung, Lackierung, Schmierung oder Hülse aufweisen, beispielsweise aus Metall oder aus Kunststoff.

Infolge der Lagerung ist der erste Halterungskopf-Trageschlitten 10 mit nur einem einzigen Freiheitsgrad versehen, nämlich mit der Bewegung entlang der x-Achse 15.

Entlang der x-Achse 15 ist der erste Halterungskopf-Trageschlitten 10 mit einem Gürtelzug 18 angetrieben verschiebbar. Der Gürtelzug 18 besteht im Wesentlichen aus einem mit zwei Umlenkrollen 19, 20 als Endlosband umlaufenden Gürtel 21, wobei der Gürtel 21 im Wesentlichen die Form eines strammen Bandes mit Metalldrähten hat. Der Gürtel 21 ist mit einer ersten Befestigung 22 am ersten Halterungskopf-Trageschlitten 10 befestigt. Die erste Befestigung 22 kann beispielsweise eine Schraube, eine Nadel, eine Niete oder einen Klemmer aufweisen.

Wird nun der Gürtel 21 des Gürtelzugs 18 über die beiden Umlenkrollen 19, 20 im Uhrzeigersinn verschoben, so bewegt sich der erste Halterungskopf-Trageschlitten 10 in der Darstellung in Figur 2 nach links entlang der x-Achse 15. Wird der Gürtel 21 hingegen gegen die Uhrzeigerdrehrichtung verschoben, bewegt sich der erste Halterungskopf-Trageschlitten 10 in der Darstellung in Figur 2 nach rechts, also hin zur Mittelscheibe 8 und zum zweiten Halterungskopf-Trageschlitten 11.

Der zweite Halterungskopf-Trageschlitten 11 ist ebenfalls am Gürtel 21 befestigt, aber auf dem gegenläufigen Strang des Gürtels 21, hier einmal also oben, einmal hingegen unten, konkret mit einer zweiten Befestigung 23, welche bevorzugt ebenso ausgeführt ist wie die erste Befestigung 22.

Jeder Bewegung des ersten Halterungskopf-Trageschlittens 10 setzt daher der zweite Halterungskopf-Trageschlitten 11 eine Gegenbewegung entgegen. Beide bewegen sich zwar nur entlang der x-Achse 15, aber immer in die entgegen gesetzte Richtung, dafür jedoch mit gleichem Distanzmaß. Infolge dessen sind der erste Halterungskopf-Trageschlitten 10 und der zweite Halterungskopf-Trageschlitten 11 des inneren Paares 9 in ihrer Bewegung gekoppelt. Da der erste Halterungskopf 12 und der zweite Halterungskopf 13 fest am jeweiligen Halterungskopf-Trageschlitten befestigt sind, sind auch die beiden Halterungsköpfe in ihren Bewegungen gekoppelt.

Zurück zur Betrachtung des ersten Halterungskopf-Trageschlittens 10 weist dieser zusätzlich zu seinem Führungsteil mit den beiden Gleitbohrungen 16, 17 einen Trägerteil 24 auf. Dieser ist im hier dargestellten Ausführungsbeispiel relativ hoch, weil sich zwischen den Stirnplatten 3, 4 in einem bevorzugten Ausführungsbeispiel ein umgebendes, geschlossenes Gehäuse befindet, welches den Gürtelzug 18 und das Schienensystem 2 abdeckt und vor Verschmutzungen schützt. Ein solches Gehäuse, welches hier nicht dargestellt ist, weist bevorzugt in seinem oberen Bereich eine schlitzartige Öffnung auf, durch welche der rotierende rechteckige Trägerteil 42a des ersten Halterungskopf-Trageschlittens (und auch der übrigen Halterungskopf-Trageschlitten) nach außen ragen kann. Ein solcher Schlitz kann beispielsweise die Dimension wie eine extrudierte Ausnehmung 25 (siehe ganz rechts in Figur 1) der Stirnplatten 3, 4 haben.

Auf den ersten Halterungskopf-Trageschlitten 10 ist der erste Halterungskopf 12 montiert. Die Aufgabe des ersten Halterungskopfes 12 ist es im Wesentlichen, an einem Trägerteil 26 eine Kamera aufzunehmen.

Die hier dargestellte Ausführungsform des ersten Halterungskopfes 12 weist außerdem eine ganze Reihe weiterer Freiheitsgrade auf:

So ist zunächst ein y-Rotationslager 27 vorgesehen. Mittels dieses Lagers kann sich der erste Halterungskopf 10 um eine y-Achse herum rotieren, bevorzugt um jeweils 90°.

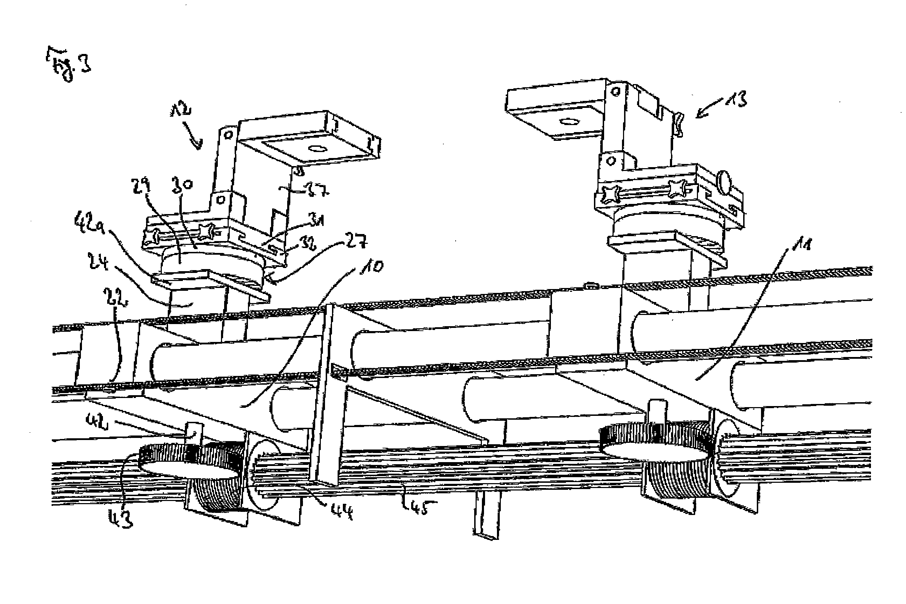

In konstruktiver Ausführung können beispielsweise zwei Scheiben vorgesehen sein, welche sich mittels eines Gewindes gegeneinander verklemmen lassen, so dass eine weitere Rotation des ersten Halterungskopfes 12 gegenüber dem Halterungskopf-Trageschlitten 10 nicht möglich ist, wohingegen bei einem Öffnen der Flächenklemmung zwischen den beiden Scheiben 29, 30 (siehe Figur 3) eine Rotation um die y-Achse 28 herum ermöglicht, oder die beiden Scheiben 29, 30 gemeinsam gegenüber einer Basis rotiert werden können.

Der erste Halterungskopf 12 weist außerdem einen ersten Schlitten 31 auf, welcher in einer ersten Schlittenführung 32 linear verschieblich gehalten ist, wie jeder der hier gezeigten Freiheitsgrade bevorzugt mit einem engen Spielsitz oder mit einem leichten Klemmsitz. Mittels zweier Fixierschrauben 33, 34 kann dieser Freiheitsgrad unterbunden oder erlaubt werden. Bevorzugt bietet die Schlittenführung 32 keine Beweglichkeit in der x-Achse und sollte mittels einer erweiterten Schlittenführung 49 verwendet werden.

Ein weiterer Freiheitsgrad findet sich am ersten Halterungskopf 12 mittels eines gegenüber seinem Basisteil 35 um einen Bolzen 36 schwenkbar gelagerten y-Abstandsteil 37. Für dessen Bewegung ist ein Feineinsteller in Form eines Rändelrads 38 vorgesehen, wobei das Rändelrad 38 in ein Gewinde (nicht dargestellt) am y-Abstandsteil 37 greift, so dass mittels des Rändelrads 38 das y-Abstandsteil 37 um mehrere ° in jede Richtung geschwenkt werden kann, beispielsweise um +/- 3 °.

Bevorzugt ist an einer Stelle 12a ein zusätzliches Rändelrad vorgesehen, mittels welchem sich die Neigung der x-Achse feinverstellen lässt, beispielsweise um +/- 3 °,

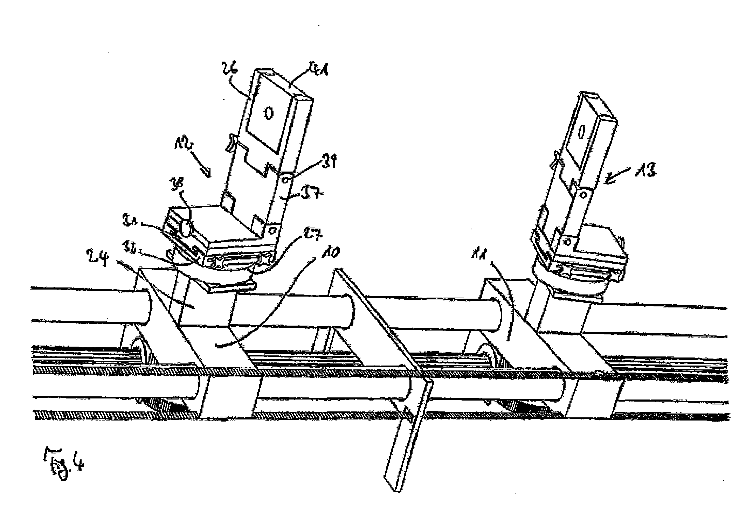

Schließlich ist der Trägerteil 26 bevorzugt um mindestens 90 ° um einen zweiten Bolzen 39 herum kippbar. So lässt sich beispielsweise der erste Halterungskopf 12 von einer Z-Form (eingenommen in den Figuren 1, 2 und 3) zu einer L-Form (eingenommen in Figur 4) sowie bevorzugt auch in jede Zwischenstellung dazwischen bringen, und auch eine darüber hinausgehende Kippbewegung des Trägerteils 26 ist denkbar, um weitere 90 ° bis hin zu einer C-Form (nicht dargestellt),

Je mehr Freiheitsgrade ein Halterungskopf aufweist, desto geschickter lässt sich der Halterungskopf letztendlich im Einsatz von seinem Bediener auf die jeweils erforderliche Einstellung enger zusammenbringen und feinjustieren. Bevorzugt ist daher jeder Freiheitsgrad separat erlaubbar und unterbindbar. Jeder Freiheitsgrad kann außerdem manuell oder motorisch angetrieben sein.

Dasselbe gilt für die Freiheitsgrade der Halterungskopf-Trageschlitten, wobei auch mit Blick auf ein mögliches Gehäuse oder auf die Austauschbarkeit von mechanischen Teilen mit möglichst geringen Kosten bevorzugt angestrebt wird, dass die Halterungskopf-Trageschlitten lediglich einen Freiheitsgrad bieten und sämtliche anderen Freiheitsgrade von den Halterungsköpfen angeboten werden.

Die hier vorgestellte Erfindung ist bereits dann umgesetzt, wenn nur einer der Freiheitsgrade zwischen zwei oder mehr Kameras mechanisch oder durch eine elektronische Steuerung gekoppelt ist. Bevorzugt sind zwei, drei, vier oder mehr Bewegungen mechanisch oder durch eine elektronische Steuerung gekoppelt.

Es sei darauf hingewiesen, dass unter dem Begriff der "Steuerung" im Rahmen der hier vorliegenden Offenbarung auch eine "Regelung" als eine spezielle Untermenge zählen soll.

Es kann eine Wasserwaage sowohl am Kamerarig als auch am Halterungskopf vorgesehen sein, wobei bevorzugt auch die Kameras eine 3-Achsen Wasserwaage trägt,

Im Einsatz des Side-by-side Kamerarigs 1 werden Kameras (in den Figuren 1 bis 4 nicht dargestellt) auf Schnelllöseplatten 41 gesetzt, wobei idealerweise eine Standard 1/4" Schraube für Stativverbindungen oder für Kameraaufsätze verwendet wird. Die Schnelllöseplatten 41 (exemplarisch gekennzeichnet) lassen sich bevorzugt im Trägerteil 26 linear einschieben und rasten in ihrer Endposition leicht ein. Alternativ lässt sich beispielsweise vorstellen, dass sie nicht von selbst einrasten, sondern mit einem Fixier-mittel dort gehalten werden, beispielsweise mit einem Steckstift.

Das side-by-side Kamerarig 1 umfasst zwei Paare an Kameraträgern. Außerdem umfasst es zwei Gürtelzüge, wobei diese auch ohne weiteres durch ein drittes miteinander gekoppelt werden können.

Es ist wahlweise so gestaltbar, dass für jedes der Paare ein eigener Gürtelzug vorgesehen ist, wobei die Gürtelzüge idealerweise über ein Getriebe miteinander bewegungsgekoppelt sind. Denn bei einer Verstellung der Paare, also bei einer Verstellung der jeweils zwei zu einem Paar zugehörigen Kameraträger gegeneinander beziehungsweise gegen den Nullpunkt 7, legen die Paare bevorzugt unterschiedliche Strecken entlang der x-Achse zurück, bewahren aber immer denselben Abstand von Objektivmitte zu Objektivmitte zueinanderAlternativ lassen sich die zwei Gürtelzüge dazu einsetzen, die vorhandenen Halterungskopf-Trageschlitten möglichst ohne Verkantungen auch bei schweren Kameramodellen durch Lastenverteilung entlang der x-Achse zu verschieben.

Bevorzugt - und hier im Ausführungsbeispiel gezeigt - lässt sich die Rotation eines Halterungskopfes um die y-Achse 28 von Seiten des Halterungskopf-Trageschlittens 10 herbeiführen. Hier vorliegend ist das y-Rotationslager so ausgestaltet, dass die untere Scheibe 29 über eine Welle 42 hindurch um die y-Achse 28 rotiert werden kann. Die Welle 42 ist hierzu ober mit einer rechteckigen Platte 42a drehfest verbunden. Die Welle 42 ist unten mit einem Betätiger verbunden, hier vorliegend mit einem Zahnrad 43. Das Zahnrad 43 ist im Eingriff mit einer Schneckenwindung 44. Das Zahnrad 43 bildet daher mit der Schneckenwindung 44 ein Schneckengetriebe.

Die Schneckenwindung 44 liegt auf einer Zahnwelle 45, welche beispielsweise an einer Stirnseite des side-by-side Kamerarigs 1 durch ein Rändelrad betätigt werden kann, und/oder die Zahnwelle 45 ist über ein weiteres Zahnrad steuerbar, beispielsweise mit einem Motor angetrieben.

Am side-by-side Kamerarig 1 sind sämtliche Schneckenwindungen auf einer Seite des Nullpunktes 7 gleich herum steigend, und gleichzeitig anders herum als diejenigen auf der anderen Seite des Nullpunktes 7. Dies führt dazu, dass bei einer Rotation der Zahnwelle 45 sämtliche Halterungsköpfe auf der einen Seite des Kamerarigs eine Rotation in eine Verdrehrichtung um die jeweils lokalen y-Achsen herum vollführen, diejenigen Halterungsköpfe auf der anderen Seite des Nullpunkts hingegen in entgegen gesetzter Richtung um die dort jeweils lokalen y-Achsen rotieren.

Bevorzugt sieht die Bewegungskopplung der Rotation vor, dass sich die Halterungsköpfe eines äußeren Paares gegenüber den Halterungsköpfen eines inneren Paares stärker rotieren. Dies ist zwar mechanisch recht aufwendig, kann aber beispielsweise durch eine elektronische Kopplung bei jeweils einzelnen angetriebenen Halterungskopfrotationen erreicht werden. Es kann sogar die Relation der verschiedenen Rotationen zueinander in Abhängigkeit der jeweiligen Veränderung der Interaxialdistanz und Objektentfernungberechnet und gezielt ausgeführt werden.

Im zweiten Ausführungsbeispiel der Halterungsköpfe 46, 47 sind ein Freiheitsgrad hinzugetreten und ein Freiheitsgrad erweitert:

In die erste Schlittenführung 32 ist nun nicht direkt das Basisteil 35 der Z-Form-Schenkel eingesetzt. Vielmehr ist zunächst eine negativ-positiv-Schiene 48 in die erste Schlittenführung 32 eingeschoben und dort fixiert. Sie bietet auf ihrer Unterseite einen Querschnitt, der mit dem ersten Schlitten 31 übereinstimmt und deshalb von der ersten Schlittenführung 32 aufgenommen werden kann. Auf ihrer Oberseite hingegen bietet die negativ-positiv-Schiene 48 eine zweite Schlittenführung 49, wobei die zweite Schlittenführung 49 entlang ihrer x-Verschiebungsachse eine größere Verstellmöglichkeit des Nodalpunktes einräumt. Unabhängig davon wurde an die Schnelllöseplatte 41 am Trägerteil 26 zunächst eine weitere Schiene 50 zum Verstellen des Nodalpunktes in der z-Achse befestigt, welche bevorzugt entlang einer Befestigungsschraube 51 oder entlang eines anderen Befestigungsmittels linear verschieblich gegenüber dem Trägerteil 26 ist. Die weitere Schiene 50 zum Verstellen des Nodalpunktes weist entweder fest verbunden oder ebenfalls modular zusammengesetzt wiederum eine Schnelllöseplatte 52 auf, welche letztendlich die Kamera aufnehmen kann - oder mit weiteren modularen Freiheitsgradverstärkern ausgerüstet werden kann.

Es sei ausdrücklich darauf hingewiesen, dass ein Halterungskopf mit einem modular ansetzbaren und entfernbaren Element zum Gleiten oder Verdrehen eine eigenständige Erfindung darstellt, insbesondere in Verbindung mit einer Kamerabestückung und/oder in Verbindung mit einer Anordnung an einen side-by-side- oder einem anderen Kamerarig.

Im Einsatz lassen sich zwei Kameraträger eines inneren Paares sehr nahe aneinander fahren. Naturgemäß gilt dies auch dann, wenn nur ein Paar Kameraträger an einem Kamerarig vorgesehen ist.

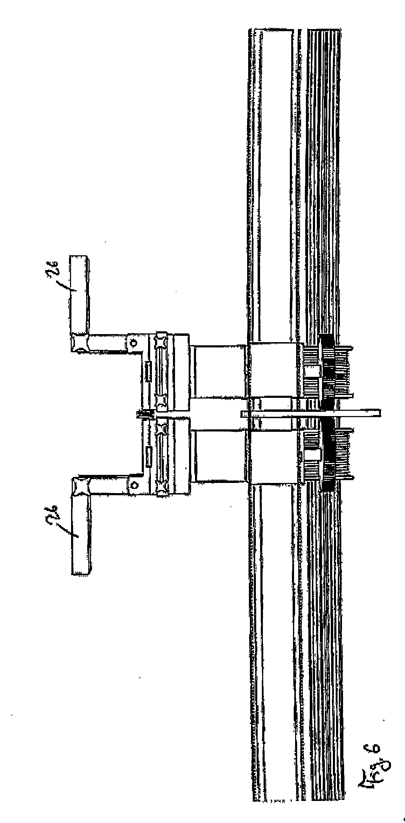

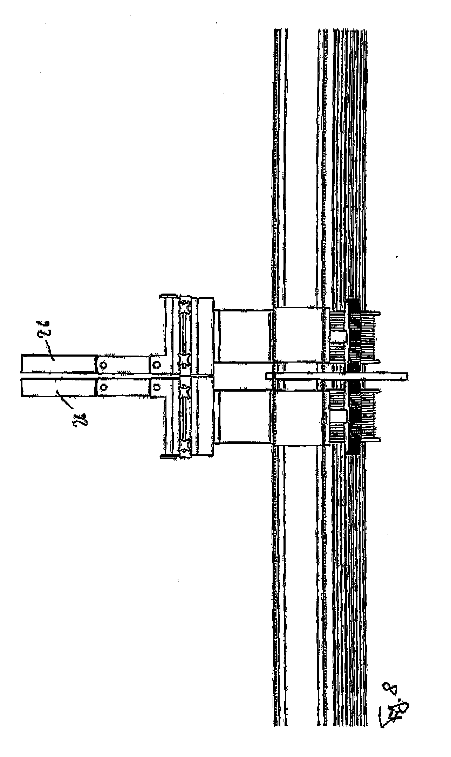

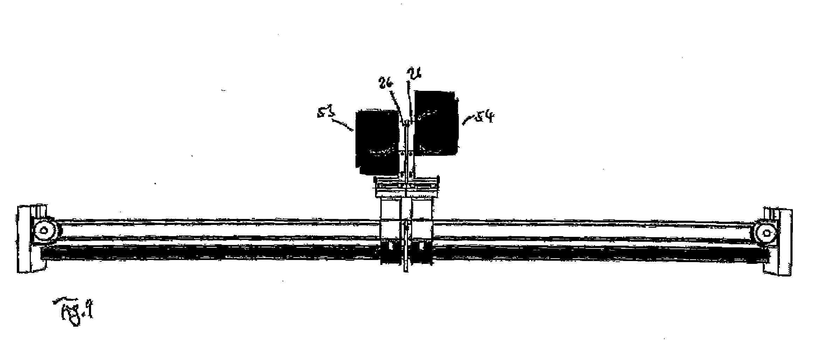

Mögliche Konstellationen der teilweise bis unmittelbar an einen Anschlag von Halterungskopf-Trageschlitten und/oder Halterungsköpfen zusammengefahrenen Vorrichtungen finden sich in den Figuren 6 bis 9. Kameras können jeweils an den Trägerteilen 26 befestigt werden, wie dies Figur 9 für die Konstellation aus Figur 8 beispielhaft darstellt.

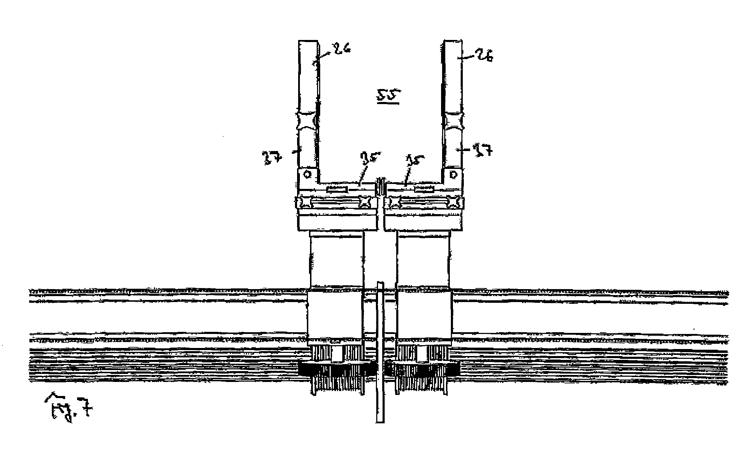

Während in der Konstellation aus den Figuren 8 und 9 jedenfalls noch die Dicke des Halterungskopfes, jedenfalls die Dicke dessen Trägerteile 26, den Abstand zwischen den beiden Kameras 53, 54 auf ein bestimmtes Mindestmaß beschränken, lässt sich leicht vorstellen, dass in der Konstellation aus Figur 7 beide Kameras im Zwischenraum 55 zwischen den beiden Trägerteilen 26 angeordnet werden können. Bei einer ausreichenden Dimensionierung der Kameras und bei einer ausreichend kleinen Dimensionierung der Basisteile 35 können die beiden Kameras bis direkt "Gehäuse gegen Gehäuse" verfahren werden. Wenn die Kameras in den Portrait-Modus geklappt sind, ist dies ohne weitere Adapter möglich.

Wenn die beiden Kameras hingegen mit der in Figur 7 gezeigten Anordnung bis direkt Gehäuse gegen Gehäuse verfahren werden sollen, dabei aber im Landscape-Modus bleiben sollen, dann gibt es gleich drei Varianten dafür: Zunächst können die beiden Trägerteile 26 jeweils noch weiter zueinander gekippt werden, so dass sich jeweils zwischen dem Trägerteil 26 und dem Basisteil 35 mit dem dazwischen liegenden y-Abstandsteil eine C-Form ergibt, und zwar aus zwei zueinander geöffneten, spiegelsymmetrisch angeordneten C's. Die Kameras können dann auf der in Figur 7 außen liegenden Seite der Trägerteile 26 angeordnet werden. Oder die Kameras können auf der jeweiligen Innenseite der Trägerteile 26 aus Figur 7 angeordnet werden, kommen dann aber kopfüber zum Liegen. Eine zweite Variante läge darin, ein Adapterstück vorzusehen, welches anstelle der Kamera am Trägerteil 26 jeweils befestigt wird und dann letztendlich nach einem verwinkelten Verlauf die Kamera trägt.

Drittens lässt sich die Variante überlegen, die beiden Halterungsköpfe jeweils um die y-Achse um 180° zu rotieren, so dass die Trägerköpfe Rücken an Rücken angeordnet werden (Figur 8). Durch ein Auseinanderfahren der Halterungsköpfe können dann die Kameras im entstehenden Zwischenraum angeordnet werden.

Es versteht sich, dass auch die jetzt aufgezählten Varianten nur einen Ausschnitt aus den insgesamt möglichen Varianten darstellen, wie die Kameras zueinander verfahren werden können.

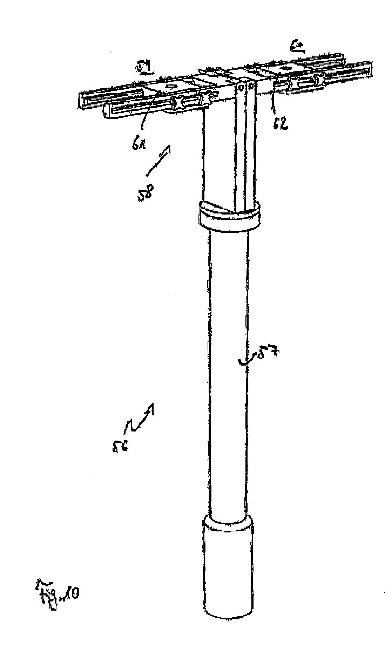

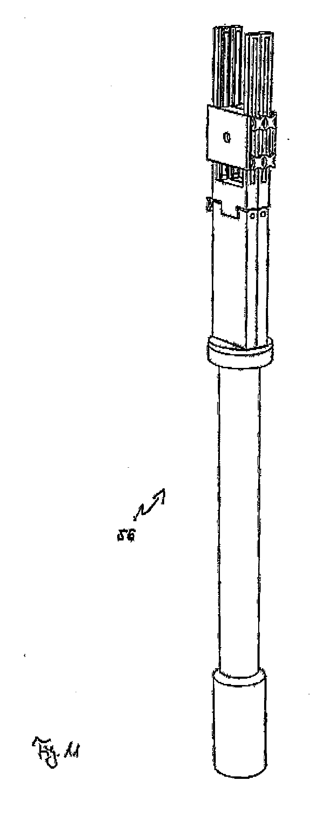

Das in den Figuren 10 und 11 dargestellte Handheld-Kamerarig besteht im Wesentlichen aus einem stabähnlichen Griffteil 57 und einem Trägerbereich 58. Der Trägerbereich 58 weist wiederum ein Schienensystem zum Einsatz unterschiedlicher Kameragrößen auf, wobei ein linker Schienenteil 59 und ein rechter Schienenteil 60 vorgesehen sind. Beide sind jeweils kippbar gelagert, so dass sie entweder in koaxialer Stellung (Figur 10) oder in paralleler, zusammengeklappter Stellung (Figur 11) angeordnet und dort jeweils fixiert werden können.

Sowohl der linke Schienenteil 59 als auch der rechte Schienenteil 60 weisen jeweils einen Schlitten auf, somit einen linken Schlitten 61 und einen rechten Schlitten 62. Beide sind entlang der x-Achse längs verschiebbar, wobei auch hier dieser Freiheitsgrad wahlweise zugelassen oder unterbunden werden kann.

Es versteht sich, dass an die beiden Schlitten weitere Elemente angebracht werden können, sei es direkt jeweils eine Kamera, seien es weitere Halter, beispielsweise zum Einräumen von weiteren Freiheitsgraden.

Im Einsatz der hier vorgeschlagenen Erfindung stellt sich somit ein weiter entwickeltes 3D-Kamerarig zum simultanen Steuern von zwei oder mehreren kommerziellen digitalen Foto- und Videokameras bei der Erstellung von stereoskopischen und autostereoskopischen Bildern zur Verfügung. Es ermöglicht der Bedienperson eine reibungslos entgegen gerichtete, parallele Bewegung beider beziehungsweise mehrerer Kameras zum Nullpunkt. Es sei ausdrücklich darauf hingewiesen, dass sogar während der Aufnahme eines Films die miteinander gekoppelten Bewegungen durchgeführt werden können, was zu besonderen optischen Effekten führen kann und mechanisch und per Software aufeinander abgestimmt sein muss.

Beispielsweise ist ein Drehgriff an der Seite eines Gehäuses vorgesehen, welches durch ein miteinander verbundenes stangengesteuertes Schneckengetriebe die gleichzeitige Ausrichtung auf einen ausgewählten Konvergenzpunkt in der Tiefe ermöglicht.

Die Kamera-Halterung weist einen Kippmechanismus auf, der eine Nutzung sowohl im Landscape-Modus als auch im Portrait-Modus erlaubt.

Die Halterung erlaubt zusätzliche Einstellungen und Korrekturen im Pan, Tilt und im Roll, was bei der Abstimmung der einzelnen Kameras aufeinander von großem Vorteil ist.

Durch den Versatz des Drehpunktes, also der Nodal-Achse in x- und z-Richtung einer befestigten Kamera, ermöglicht neben der Feinkalibrierung des Rotationspunktes der Konvergenz auch den zusätzlichen Einzelbetrieb als Panoramakopf.

Der Interaxialabstand und die Konvergenz der Kameras können beliebig eingestellt werden und miteinander gekoppelt werden. Dies erleichtert den parallelen Betrieb von zwei oder mehreren verbundenen Kameras bei stereoskopischen und autostereoskopischen 3D-Foto- und Videoproduktionen. Die Anpassungsmöglichkeiten sind weitestgehend vereinfacht.

Im Ergebnis lässt sich der erforderliche Zeitaufwand zum Erstellen der Aufnahme wieder mehr auf den kreativen Prozess legen und unterliegt nicht im bisher bekannten Maße den langwierigen Kameraeinstellungen im Vorfeld der Produktionen.

Mittels eines Fluidkopfes auf einem Stativ können unterhalb des side-by-side Kamerarigs Pan- und Tilt-Bewegungen zum Anpassen des Neigungswinkels durchgeführt werden und erlaubt auf einer Schiene eine Verlagerung des Gesamtgewichts. Zudem sind weitere Aufnahmemöglichkeiten gegeben, beispielsweise mittels eines Dolly, mittels einer Steadycam, eines Handheld-Kamerarigs (zwei Griffe) oder beispielsweise auf einem Kran mit einem mechanischen gesteuerten Kopf.

Die Synchronisierung mehrerer Motoren macht ein 3D-Kamerasystem kompliziert und erfordert den zusätzlichen Einsatz von Kalibrierungssystemen, um die Erfassung der stereoskopischen Motive nach Möglichkeit fehlerfrei zu gewährleisten. Die Abgleichung der beiden Einzelbilder erfolgt bevorzugt mittels einer Echtzeit-Kalibrierung mit einem computergestützten Image-Prozessor und erzeugt in Echtzeit Daten über den aktuellen Versatz, welche wiederum manuell oder durch Motoren korrigiert werden können.

Die hier vorgeschlagene Erfindung hat einige Vorteile gegenüber herkömmlichen Beam-Splitter-Mirror-Kamerarigs. Es vereinfacht den Prozess der dreidimensionalen Bilderfassung merklich und hat einen sehr hohen Effizienzertrag im Arbeitsablauf von Fotografen und Filmemachern. Er ist durch seine ergonomische und mobile Bauweise dazu entwickelt, parallele reibungslose Interaxialbewegungen und synchronisierte Konvergenzrotationen im side-by-side-Modus auszuführen. Mittels einfacher Handhabung ist eine schnelle Ausrichtung beider Kameras aufeinander zu gewährleisten. Der Bediener hat eine exzellente Kontrolle über die interaxialen Positionen beider Kameras, welche idealerweise in einem immer gleichen Abstand zum Nullpunkt zusammen und auseinander fahren.

Das vorgestellte Prinzip erlaubt es mit jeweils nur einem bevorzugt hochauflösenden Motor schnelle und unkomplizierte Angleichungen der Kameras für Interaxialität und Konvergenz vorzunehmen und dabei beispielweise mittels Verwendung eines Messschiebers und eines Spindelpotentiometers beide Werte auf einem LCD-Display abzulesen.

Die Anordnung der Mechanik und der Elektronik kann für die Gestaltung des side-by-side Kamerarigs wichtig sein, um die Länge der Verdrahtung und das Gewicht insgesamt möglichst gering zu halten und Mobilität zu gewährleisten.

Mit dem Einsatz kleinerer Kameras lassen sich diese bis zu einem Abstand von weniger als 55 mm zusammen schieben.

Das side-by-side Kamerarig bietet eine Reihe von Halterungspositionen und kann sowohl handbetrieben als auch auf zwei Stativen, auf einem Kran mit mechanischem Kopf oder mit Standfüßen auf einer flachen Fläche abgestellt und betrieben werden.

Es bietet die Befestigung für fast alle gängigen Digitalkameras aufgrund der genormten Schraubverbindung. Einmal eingestellt besticht es durch seine stabile Bauweise in einer absolut fixen Position, resistent gegen Erschütterungen oder andere Einflüsse während der Bilderfassungen,

Beide Kameras können - bevorzugt durch einen Steckstift - wahlweise mit einem einfachen Klapp-Mechanismus sowohl im Landscape-Modus oder im Portrait-Modus betrieben werden.

Durch die Schnelllösefunktion können die Kameras bei Bedarf schnell aus der Halterung gelöst werden, beispielsweise um einen Batteriewechsel vorzunehmen oder um die Kamera manuell anderweitig zu betreiben.

Kameras können an der Befestigungshalterung angebracht und versetzt werden, so dass der Nodalpunkt für jede Kamera individuell festgesetzt werden kann.

Im Idealfall ist die Kippachse des Schwerpunkts durch den Versatz identisch mit dem Nodalpunkt im Zentrum des Objektivs angeordnet.

Da jedoch gemäß den jeweiligen Produktionsbedingungen Objektive mit unterschiedlichen Längen verwendet werden und damit der Nodalpunkt variiert, kann der Gesamtschwerpunkt entlang der z-Achse versetzt werden.

Um Bildverluste zu vermeiden, wird bevorzugt durch das Tilt-Shift-Verfahren das linke und das rechte Bild zur Angleichung in der x-Achse aufeinander zurück versetzt, und zwar mit einem Offset, wodurch die Beschneidung der einzelnen Bilder an den Rändern entfällt oder zumindest auf ein Minimum reduziert wird und ein größerer Überlappungsbereich entsteht.

Mittels einer Echtzeitkontrolle am Bildschirm kann der Stereographer in vielfältiger Weise Anpassungen und Ausrichtung der Kameras am Bildschirm vornehmen und direkt anhand der Einstellungswerte sehen, ob diese im vertretbaren Rahmen liegen.

Um parallel zeitgleich die Kameras auszulösen, wird bevorzugt durch eine Kabel- oder Funk-Fernbedienung ein Steuersignal an die Kameras gesendet.

Bevorzugt sind zwei Kameras, insbesondere alle Kameras, identisch.

Am Ende der Postproduktion findet die Videoausgabe auf einem dreidimensionalen Computerdisplay oder einem dreidimensionalen Fernsehbildschirm mit oder ohne Brille statt und sollte Idealerweise in vorgegebenem Abstand und Augenhöhe vom Publikum betrachtet werden.

### Bezugszeichenliste

- 1: side-by-side Kamerarig
- 2: Schienensystem
- 3: Stirnplatte
- 4: Stirnplatte
- 5: Gleitstange
- 6: Gleitstange
- 7: Nullpunkt
- 8: Mittelscheibe
- 9: Inneres Paar
- 10: Erster Halterungskopftrageschlitten
- 11: Zweiter Halterungskopftrageschlitten
- 12: Erster Halterungskopf
- 12a: Stelle
- 13: Zweiter Halterungskopf
- 14: Gleitteil
- 15: x-Achse
- 16: Gleitbohrung
- 17: Gleitbohrung
- 18: Gürtelzug
- 19: Umlenkrolle
- 20: Umlenkrolle
- 21: Gürtel
- 22: Erste Befestigung
- 23: Zweite Befestigung
- 24: Trägerteil
- 25: Ausnehmung
- 26: Trägerteil
- 27: y-Rotationslager
- 28: y-Achse
- 29: Scheibe
- 30: Scheibe
- 31: Erster Schlitten
- 32: Erste Schlittenführung
- 33: Fixierschraube
- 34: Fixierschraube
- 35: Basisteil
- 36: Bolzen
- 37: y-Abstandsteil
- 38: Rändelrad
- 39: Zweiter Bolzen
- 40: Fixierschraube
- 41: Schnelllöseplatte
- 42: Welle
- 42a: rechteckige Platte
- 43: Zahnrad
- 44: Schneckenwindung
- 45: Zahnwelle
- 46: Halterungskopf
- 47: Halterungskopf
- 48: Negativ-positiv-Schiene
- 49: Zweite Schlittenführung
- 50: Weitere Schiene
- 51: Befestigungsschraube
- 52: Zweite Schnelllöseplatte
- 53: Kamera
- 54: Kamera
- 55: Zwischenraum
- 56: Handheld-Kamerarig
- 57: Griffteil
- 58: Trägerbereich
- 59: Linker Schienenteil
- 60: Rechter Schienenteil
- 61: Linker Schlitten
- 62: Rechter Schlitten

## Patentansprüche

1. Kamerarig, insbesondere side-by-side Kamerarig, mit einem Schienensystem mit zwei in x-Achse beweglich angeordneten Halterungskopftrageschlitten, sowie bevorzugt mit zwei an den Halterungskopftrageschlitten angeordneten Halterungsköpfen, zum Halten zweier Kameras beim Erstellen von stereoskopischen und autostereoskopischen Aufnahmen, ***dadurch gekennzeichnet*, *dass*** ein Koppelantrieb für eine gekoppelte Bewegung beider an den Halterungskopftrageschlitten angeordneten Halterungsköpfe vorgesehen ist.

2. Kamerarig nach Anspruch 1, ***dadurch gekennzeichnet*, *dass*** der Koppelantrieb x-Verschiebemittel für die Halterungskopftrageschlitten aufweist, sodass bei Verschieben eines Halterungskopftrageschlittens entlang der x-Achse sich der andere Halterungskopftrageschlitten ebenfalls entlang der x-Achse verschiebt, insbesondere symmetrisch bezüglich des Nullpunkts der beiden Halterungskopftrageschlitten am Kamerarig.

3. Kamerarig nach Anspruch 2, ***dadurch gekennzeichnet*, *dass*** die x-Verschiebemittel einen Gürtelzug mit einer Umlenkung aufweisen.

4. Kamerarig nach einem der vorhergehenden Ansprüche, ***dadurch gekennzeichnet, dass*** der Koppelantrieb y-Rotationsmittel für die Halterungsköpfe an den Halterungskopftrageschlitten aufweist, sodass beim Rotieren einer Halterungskopfplatte um die y-Achse der andere Halterungskopf ebenfalls rotiert, insbesondere um ein identisches Winkelmaß in entgegengesetzter Drehrichtung.

5. Kamerarig nach Anspruch 4, ***dadurch gekennzeichnet*, *dass*** die Rotationsmittel eine Welle mit einem Schneckengetriebe aufweisen, insbesondere ein linksdrehendes und ein rechtsdrehendes Schneckengetriebe für auf unterschiedlichen Seiten des Nullpunkts des Kamerarigs angeordnete Halterungsköpfe.

6. Kamerarig nach einem der vorhergehenden Ansprüche, ***dadurch gekennzeichnet, dass*** der Halterungskopftrageschlitten für seinen Halterungskopf einen Kippmechanismus aufweist, der mittels eines Kippens einer vom Halterungskopf gehaltenen Kamera um 90° einen Wechsel zwischen dem Landscapemodus und dem Portraitmodus ermöglicht, wobei der Kippmechanismus bevorzugt eine mechanische Sicherung aufweist, insbesondere mit einem Steckstift.

7. Kamerarig nach einem der vorhergehenden Ansprüche, ***dadurch gekennzeichnet, dass*** der Halterungskopf eine Schnelllösehalterung mit einem Schnelllösebetätiger aufweist.

8. Kamerarig nach einem der vorhergehenden Ansprüche, ***dadurch gekennzeichnet, dass*** der Halterungskopf gegenüber dem Halterungskopftrageschlitten ein Nodalachsenversatzmittel aufweist, insbesondere einen Nodalachsenversatzschlitten für einen Versatz einer getragenen Kamera entlang der x-Achse und der z-Achse.

9. Kamerarig nach einem der vorhergehenden Ansprüche, ***dadurch gekennzeichnet, dass*** der Halterungskopf ein y-Rotationslager aufweist.

10. Kamerarig nach einem der vorhergehenden Ansprüche, ***dadurch gekennzeichnet, dass*** ein Feinversteller für einen y-Rotationswinkel, einen x-Neigungswinkel und/oder einen z-Rollwinkel einer vom Halterungskopf gehaltenen Kamera vorgesehen ist.

11. Kamerarig nach einem der vorhergehenden Ansprüche, ***dadurch gekennzeichnet, dass*** nur genau ein Motor für eine gekoppelte Bewegung zweier Halterungsköpfe gegenüber dem Kamerarig und/oder gegenüber einander vorgesehen ist, insbesondere nur genau ein Motor für ein gekoppeltes x-Verschieben zweier Halterungskopftrageschlitten gegenüber dem Kamerarig und/oder nur genau ein Motor für ein gekoppeltes y-Rotieren zweier Halterungsköpfe gegenüber dem Kamerarig.

12. Handheld-Kamerarig, insbesondere side-by-side Handheld-Kamerarig, mit einem Griffteil, und mit einem Tragsystem mit zwei beweglich angeordneten Halterungsköpfen zum Tragen zweier Kameras beim Erstellen von stereoskopischen und autostereoskopischen Aufnahmen, sowie einem stativfähigen Standfuß.

13. Kamerarig nach einem der Ansprüche 1 bis 11 und/oder Handheld-Kamerarig nach Anspruch 12, ***dadurch gekennzeichnet*, *dass*** die beweglichen Halterungsköpfe einen Verschwenkmechanismus gegeneinander aufweisen, sodass zwei daran getragene Kameras sowohl im Landscapemodus als auch im Portraitmodus parallel gestellt werden können, wobei sich die Halterungsköpfe in einem der beiden Modi beabstandet zueinander parallel stellen, sodass die beiden getragenen Kameras Gehäuse an Gehäuse ohne dazwischen liegende Trägerteile zu liegen kommen können.

14. Halterungskopf, insbesondere zum Anordnen an einem Kamerarig nach einem der Ansprüche 1 bis 11 und 13 und/oder an einem Handheld-Kamerarig nach einem der Ansprüche 12 bis 13, ***dadurch gekennzeichnet*, *dass*** der Halterungskopf einen Basisteil und einen kippbaren Trägerteil aufweist, wobei der kippbare Trägerteil um 90° kippbar ist und zu beiden Seiten des Kippbewegung jeweils einen Anschlag und/oder eine Arretierung aufweist, insbesondere mit einem Steckstift.

15. Halterungskopf, insbesondere zum Anordnen an einem Kamerarig nach einem der Ansprüche 1 bis 11 und 13 und/oder an einem Handheld-Kamerarig nach einem der Ansprüche 12 bis 13, vor allem Halterungskopf nach Anspruch 14, ***dadurch gekennzeichnet*, *dass*** der Halterungskopf ein Nodalachsenversatzmittel aufweist, insbesondere einen Nodalachsenversatzschlitten für einen Versatz einer getragenen Kamera entlang der x-Achse und der z-Achse.

16. Halterungskopf, insbesondere zum Anordnen an einem Kamerarig nach einem der Ansprüche 1 bis 11 und 13, vor allem Halterungskopf nach Anspruch 14 oder 15, ***dadurch gekennzeichnet*, *dass*** der Halterungskopf ein y-Rotationslager für eine an ihm getragene Kamera aufweist.

17. Halterungskopf nach einem der Ansprüche 14 bis 16, ***dadurch gekennzeichnet, dass*** zwischen dem Basisteil und dem kippbaren Trägerteil ein y-Abstandsteil vorgesehen ist, insbesondere in seiner Erstreckung orthogonal zur x-Erstreckung des Basisteils und/oder je nach Kipplage des kippbaren Trägerteils entweder parallel zu einer y-Erstreckung des kippbaren Trägerteils oder rechtwinklig zur x-Erstreckung des kippbaren Trägerteils, sodass der Halterungskopf bevorzugt wahlweise eine L-Form oder eine Z-Form einnehmen kann.

18. Halterungskopf nach einem der Ansprüche 14 bis 17, ***dadurch gekennzeichnet, dass*** ein Feinversteller für einen x-Neigungswinkel und/oder für einen z-Rollwinkel einer vom Halterungskopf gehaltenen Kamera vorgesehen ist, mit einem Wirkeingriff auf eine Lage des kippbaren Trägerteils gegenüber dem Basisteil.

19. Halterungskopf nach Anspruch 18, ***dadurch gekennzeichnet, dass*** der Feinversteller ein Rändelrad und/oder einen Motor aufweist.

20. Bildaufnahmeanordnung mit einem Kamerarig nach einem der Ansprüche 1 bis 11 und 13 oder mit einem Handheld-Kamerarig nach einem der Ansprüche 12 bis 13, mit einer daran gehaltenen Mehrzahl Kameras, wobei die Kameras bevorzugt gemeinsam gesteuert sind, und/oder bevorzugt aufweisend eine Mehrzahl Halterungsköpfe nach einem der Ansprüche 14 bis 19.

21. Bildaufnahmeanordnung nach Anspruch 20, ***dadurch gekennzeichnet*, *dass*** die Kameras rotierbare Tilt-Shift-Objektive zur Verwendung des Offsets in der x-Achse aufweisen.

22. Bildschirmträger, insbesondere bestückt mit einem Bildschirm, vor allem mit einem 3D-wiedergabefahigen Flachbildfernseher, ***gekennzeichnet durch*** eine Schwenklagerung zum Umschwenken des Bildschirms um 90° zum Wechseln zwischen dem Landscapemodus und dem Portraitmodus für die Wiedergabe entsprechender Aufnahmen, wobei die Schwenklagerung bevorzugt eine mechanische Sicherung und/oder einen mechanischen Anschlag aufweist, vor allem sowohl für die Wiedergabe sowohl im Landscapemodus als auch im Portraitmodus.

23. Verfahren zum Erstellen einer stereoskopischen oder autostereoskopischen Bildaufnahme, wobei eine Mehrzahl Kameras sowie ein Kamerarig nach einem der Ansprüche 1 bis 11 und 13 und/oder ein Handheld-Kamerarig nach einem der Ansprüche 12 bis 13 und/oder einen Halterungskopf nach einem der Ansprüche 14 bis 19 eingesetzt werden, und/oder wobei für das Verfahren eine Mehrzahl identischer Kameras mit Tilt-Shift-Modulen verwendet werden kann.

24. Verfahren zum Betrachten einer stereoskopischen oder autostereoskopischen Bildaufnahme an einem 3D-wiedergabefähigen Bildschirm, wobei der Bildschirm je nach Aufnahmeformat zwischen zwei Positionen mittels eines Bildschirmträgers nach Anspruch 22 bis zu den jeweiligen mechanischen Anschlägen hin- und her-geschwenkt wird und bevorzugt auf eine Betrachteraugenhöhe verfahren wird.
